Europäisches Patentamt

European Patent Office

Office européen des brevets

(19)

(11) **EP 0 937 233 B1**

(12) **FASCICULE DE BREVET EUROPEEN**

(45) Date de publication et mention
de la délivrance du brevet:
**01.12.2004 Bulletin 2004/49**

(21) Numéro de dépôt: **98942829.7**

(22) Date de dépôt: **04.09.1998**

(51) Int Cl.⁷: $G01G\ 3/14$

(86) Numéro de dépôt international:
**PCT/FR1998/001900**

(87) Numéro de publication internationale:
**WO 1999/013301 (18.03.1999 Gazette 1999/11)**

(54) **DISPOSITIF ET PROCEDE DE PESAGE EMBARQUE ET EN CONTINU DE RECOLTE, ET MACHINES DE RECOLTE EN FAISANT APPLICATION**

ERNTEVORRICHTUNG UND -VERFAHREN ZUM EINGEBAUTEN UND FORTLAUFENDEN WIEGEN SOWIE DEREN ANWENDUNG IN ERNTEMASCHINEN

ON-BOARD DEVICE AND METHOD FOR CONTINUOUS WEIGHING OF HARVEST, AND HARVESTING MACHINES USING SAME

(84) Etats contractants désignés:
**AT DE ES FR GB IT PT**

(30) Priorité: **05.09.1997 FR 9711265**

(43) Date de publication de la demande:
**25.08.1999 Bulletin 1999/34**

(73) Titulaire: **Pellenc (Société Anonyme)**
**84120 Pertuis (FR)**

(72) Inventeurs:
• **PELLENC, Roger**
**F-84120 Pertuis (FR)**

• **BOURELY, Antoine**
**F-84240 La Tour d'Aigues (FR)**

(74) Mandataire: **Marek, Pierre**
**Cabinet Marek,**
**28, rue de la Loge**
**13002 Marseille (FR)**

(56) Documents cités:
**EP-A- 0 656 530**　　　**WO-A-89/03023**
**DE-A- 4 239 201**　　　**DE-A- 19 544 057**
**FR-A- 2 601 771**　　　**FR-A- 2 709 230**

Printed by Jouve, 75001 PARIS (FR)

**Description**

La présente invention concerne un dispositif et un procédé de pesage embarqué et en continu de récolte de produits agricoles divers pouvant se présenter sous forme de grains (céréales et autres), ou de graines (café, haricots, etc.), ou de baies (raisin, framboises, groseilles, cassis, etc.), ou autres (olives, noix, amandes, tomates, etc.).

Elle vise également les machines de récolte de produits agricoles divers faisant application de ce dispositif et de ce procédé.

D'une manière générale, le pesage en continu embarqué sur machines de récoltes vise à offrir aux agriculteurs la possibilité de connaître, en temps réel, le rendement à l'hectare de leurs parcelles de terrain cultivées et d'établir des cartographies parcellaires utilisables pour le choix des cultures et/ou pour les traitements des terrains.

Le dispositif et le procédé de l'invention sont très avantageusement applicables au pesage embarqué et en continu de récolte de baies telles que raisin, framboises, groseilles, cassis, etc., de sorte que l'on décrit plus spécialement ci-après cette application à titre d'exemple nullement limitatif.

Par exemple, dans le domaine de la viticulture, on sait que la production de vins de qualité (vins d'appellation d'origine contrôlée) oblige les vignerons, lors de la récolte, à ne pas dépasser des rendements à l'hectare fixés par des textes réglementaires en fonction des appellations.

D'autre part, on sait que la viticulture mondiale et particulièrement la viticulture française sont de plus en plus orientées vers des productions de qualité.

Pour atteindre cet objectif, on doit nécessairement procéder à une vendange sélective suivant laquelle on récolte uniquement les baies présentant les qualités de maturation requises. Actuellement, de telles récoltes sélectives s'opèrent manuellement. Toutefois, la demanderesse vient de mettre au point une machine et un procédé de récolte sélective de baies, utilisant un système de secouage connu en soi, constitué de deux ensembles de détachement des baies superposés, et accouplé à au moins un dispositif électro-hydraulique d'entraînement comprenant au moins un vérin hydraulique commandé par une servovalve asservie par un ensemble électronique de commande à microprocesseur.

Cependant, même si l'on maîtrise les lois de mouvements des secoueurs ou bras cueilleurs, il est indispensable, pour parvenir à une récolte sélective avec le meilleur rendement autorisé par le texte réglementaire applicable à la zone d'appellation considérée, de connaître, en temps réel, le poids de raisin récolté.

Les essais de pesage en continu effectués au moyen d'appareils et procédés connus, ont permis de vérifier qu'il n'est pas possible d'extrapoler le système de mesure en continu du rendement à l'hectare des moissonneuses batteuses, car les produits en cause sont tout à fait différents (la vendange étant en partie liquide). D'autre part, une autre difficulté majeure du pesage en continu de la récolte sur une machine à vendanger, en cours de travail, résulte de l'importance des perturbations du pesage occasionnées par la vibration de la tête de récolte et des inclinaisons de la machine dans les côtes, les pentes et les dévers, lorsqu'elle travaille sur un terrain accidenté.

L'invention a donc pour objet un procédé et un dispositif de pesage embarqué, en continu et en temps réel de la récolte, permettant de s'affranchir des causes susmentionnées susceptibles de fausser la pesée, et d'obtenir la meilleure précision possible.

On connaît (DE 195 44 057 A) un système de pesage embarqué pour moissonneuse-batteuse utilisant deux balances électroniques, l'une de ces balances étant une balance témoin avec masse de référence connue. Cependant, selon ce système l'autre balance pèse à chaque instant la totalité de l'élévateur à grains, y compris le dispositif d'entraînement et un grand nombre de lots de grains (environ une vingtaine). Avec un tel système, on n'a donc accès à chaque moment qu'au poids total de l'ensemble des lots présents dans l'élévateur et non pas au poids individuel de chaque lot ou d'un petit nombre de lots. D'autre part, le fait de peser l'élévateur lui-même diminue fortement la dynamique utile du signal de mesure.

On connaît également (WO-89103023A) une machine et un procédé de pesage mettant en oeuvre deux balances électroniques placées sur un même support et reliées à un calculateur électronique, l'une de ces balances étant une balance témoin supportant une masse de référence fixe connue, tandis que la seconde balance supporte un plateau de pesée, le calculateur électronique étant programmé pour effectuer un traitement des signaux provenant des deux balances, afin d'éliminer l'effet des perturbations dynamiques auxquelles peuvent être soumises ces dernières. Le procédé et la machine décrits dans le document susmentionné ne permettent pas d'effectuer le pesage très spécifique qu'est le pesage en continu sur machine de récolte telle que machine à vendanger.

On connaît aussi (EP 0 656 530 A) une machine de pesage comprenant un plateau de pesage constitué par un convoyeur à bande dont la structure portante repose sur une pluralité de cellules de pesage disposées sur le sol, cette machine comportant encore des cellules de détection de vibrations disposées sur le sol pour détecter les vibrations de ce dernier et émettre des signaux de détection, et une unité de traitement de signaux permettant un traitement des signaux provenant des cellules de pesage et des cellules de détection de vibrations, pour corriger les effets des vibrations du sol sur les signaux de poids. Cette machine ne met pas en oeuvre un couple de balances constitué d'une balance supportant un plateau de pesée et une balance-témoin supportant une masse de référence fixe connue. Elle ne met pas en oeuvre, non plus, des moyens assurant le passage en continu d'une récolte sur le plateau de pesée d'une deuxième balance placé en stationnement, sur le trajet de récolte, ni l'utilisation d'un calculateur électronique programmé pour effectuer, en cours de pesage, un traitement algorithmique des signaux provenant des deux balances, pour éliminer l'effet des perturbations dynamiques auxquelles sont soumises celles-ci.

Ni la machine exposée dans le document WO 89/03023, ni celle qui est décrite dans le document EP-0.656.530A, ne sont utilisables pour effectuer un pesage en continu, ou par lots successifs, sur machines de récolte, de produits récoltés très particuliers mi-solides, mi-liquides, tels que la vendange.

Selon le procédé de l'invention :

- on dispose deux balances électroniques, de préférence identiques, sur un même support et le plus près possible l'une de l'autre, ces balances étant par exemple à jauge de contrainte ou à système capacitif ;

- on relie les deux balances à un calculateur électronique capable d'effectuer un traitement algorithmique des signaux provenant des deux balances, pour éliminer l'effet des perturbations dynamiques résultant des pentes, inclinaisons et vibrations auxquelles elles sont soumises, lorsque ladite machine de récolte est en action,

- l'une des balances supporte une masse fixe connue, et opère des pesées successives de cette masse ;

- l'autre balance munie d'un plateau de pesée placé sur le trajet de la récolte, opère en même temps des pesées de cette récolte ;

- ledit procédé étant remarquable en ce que la récolte est acheminée automatiquement, en continu et/ou par lots successifs, sur le plateau de pesée de la seconde balance, au moyen d'un système d'entraînement indépendant dudit plateau de pesée, c'est-à-dire ne touchant pas ce dernier.

Le dispositif selon l'invention comprend deux balances électroniques, de préférence identiques, par exemple à jauge de contrainte ou à système capacitif, placées sur un même support et reliées à un calculateur électronique capable d'effectuer un traitement algorithmique des signaux provenant des deux balances, pour éliminer l'effet des perturbations dynamiques résultant des pentes, inclinaisons et vibrations auxquelles elles sont soumises lorsque ladite machine de récolte est en action l'une de ces balances étant une balance témoin supportant une masse de référence fixe connue, tandis que la seconde balance supporte un plateau de pesée, placé sur le trajet de la récolte, ce dispositif étant remarquable en ce qu'il comprend un système d'entraînement a tomatique de la récolte, indépendant du plateau de pesée, c'est-à-dire ne touchant pas ce dernier, et se déplaçant au-dessus dudit plateau de pesée, ce système d'entraînement assurant le passage, en continu ou par lots successifs, de la récolte sur ledit plateau de pesée de la balance peseuse.

Dans l'application aux machines à vendanger, le procédé et le dispositif selon l'invention permettent le pesage en continu et en temps réel de la vendange, avec une erreur inférieure à 3 %.

Selon une autre disposition caractéristique du procédé de l'invention, l'algorithme de traitement des signaux $P$ et $P_o$ provenant des deux balances peut être avantageusement le suivant :

$$(1) \qquad P = M. [(\vec{g} + \vec{\gamma}). \vec{Z}]$$

$$(2) \qquad P_o = M_o. [(\vec{g} + \vec{\gamma}). \vec{Z}]$$

d'où on déduit :

$$(3) \qquad M = M_o. P/P_o$$

A tout instant, la force mesurée sur une balance est donnée par la formule

$$(1) \qquad P = M. [(\vec{g} + \vec{\gamma}). \vec{Z}]$$

Dans cette formule,

P est la force mesurée,
M est la masse à mesurer,
$\vec{g}$ est l'accélération de la pesanteur, dirigée vers le bas,
$\vec{\gamma}$ est l'accélération représentant les perturbations dynamiques, dirigée aléatoirement.
$\vec{Z}$ est le vecteur unitaire perpendiculaire aux plateaux de pesée, et est orienté suivant l'inclinaison de la machine.

Le problème est que les termes y et Z sont inconnus.

Cependant, la force mesurée par la balance supportant la masse fixe est au même instant donnée par la formule (2).

$$(2) \qquad P_o = M_o. [(\vec{g} + \vec{\gamma}). \vec{Z}]$$

Dans cette formule :

$P_o$ est la force mesurée par la balance témoin supportant la masse fixe ;

$M_o$ est la valeur de la masse fixe.

Le terme entre crochets dans les deux formules est un nombre, à savoir le produit scalaire des vecteurs considérés. Il est identique dans les deux formules, il est donc possible de diviser une formule par l'autre.

On obtient alors la formule (3), où les vecteurs inconnus ont été éliminés.

$$(3) \qquad M = M_o . \, P/P_o$$

Selon une autre disposition caractéristique, le système d'entraînement de la récolte assurant le passage de celle-ci sur le plateau peseur de la balance de pesée, comporte une bande transporteuse et le dispositif de pesage comprend des moyens permettant de mesurer la vitesse de déplacement de cette bande transporteuse, ces moyens de mesure étant reliés au calculateur électronique.

De la sorte, les informations de masse fournies par chaque pesée combinées aux informations de vitesse de déplacement de la bande transporteuse, permettent de calculer le débit massique récolté.

Selon une autre disposition caractéristique, l'ensemble calculateur électronique du système de pesage est accouplé aux capteurs de roues ou autres dispositifs de mesure de vitesse d'avancement équipant la machine de récolte.

Grâce à cette disposition, le débit massique mesuré en continu permet de déterminer non seulement le poids total de la vendange depuis le début de la parcelle vendangée, mais également le rendement à l'hectare depuis le début de ladite parcelle, ainsi que le poids de raisin par mètre linéaire et même le poids de raisin par souche.

Les buts, caractéristiques et avantages ci-dessus et d'autres encore, ressortiront mieux de la description qui suit et des dessins annexés dans lesquels :

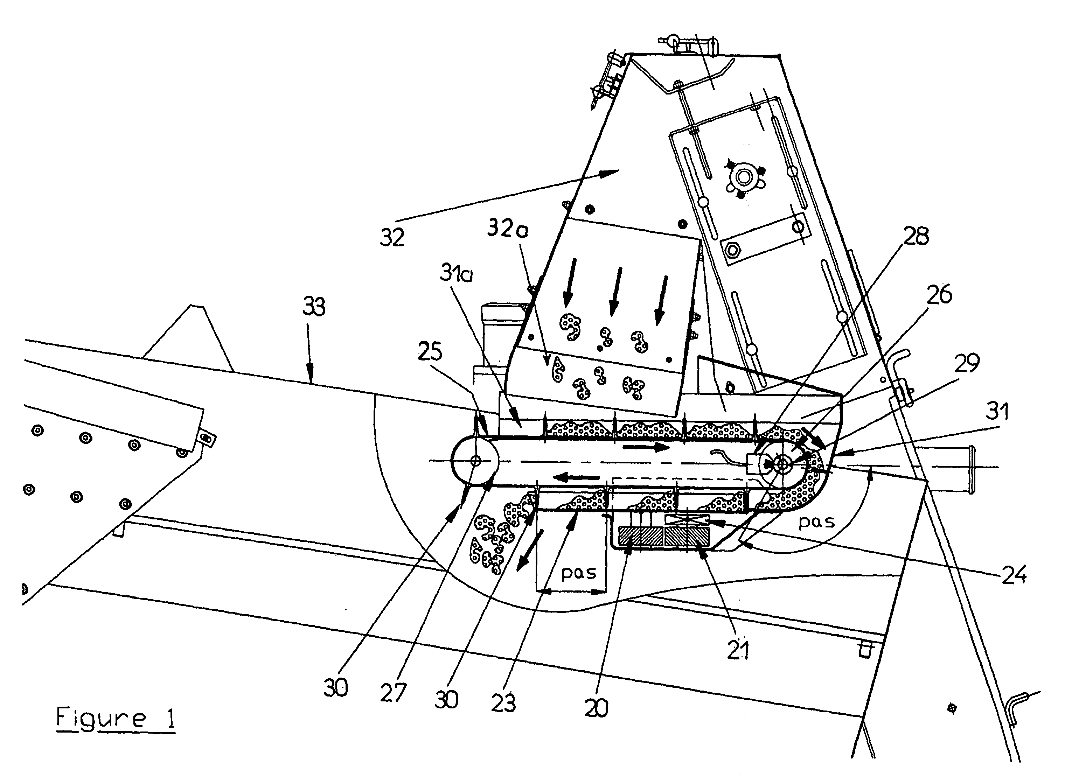

La figure 1 est une vue de face du système de pesage embarqué selon l'invention représenté installé au-dessous de l'ouverture de déchargement d'un convoyeur élévateur permettant d'acheminer les baies récoltées jusqu'à l'une des bennes de réception de la vendange équipant la machine de récolte.

La figure 2 est une vue de face et à plus grande échelle du système de pesage représenté seul.

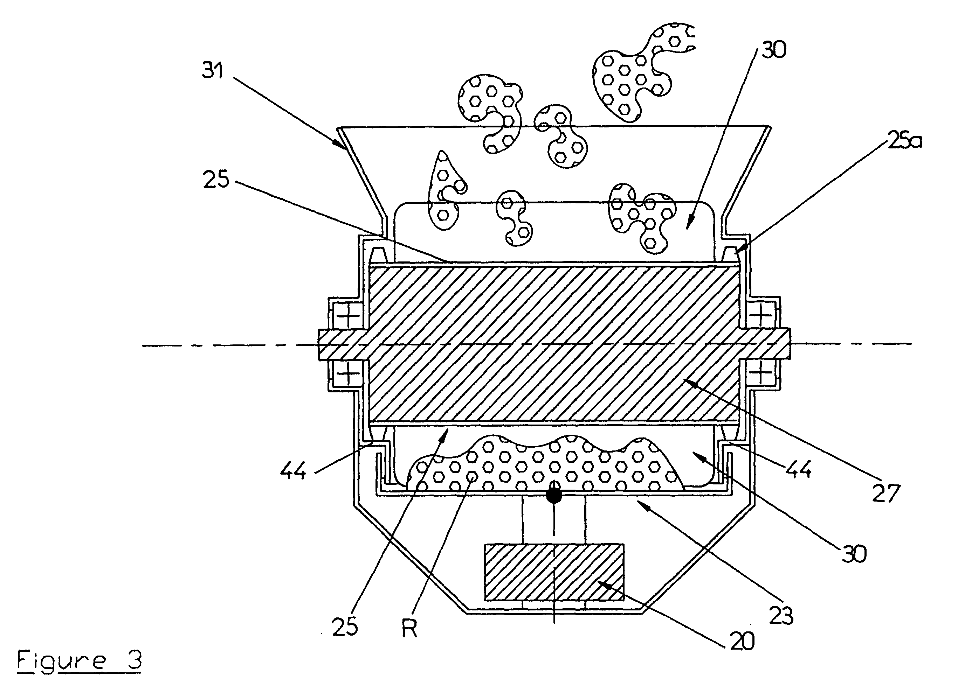

La figure 3 est une vue de détail illustrant le guidage de la bande transporteuse assurant le passage de la récolte sur le plateau de pesage.

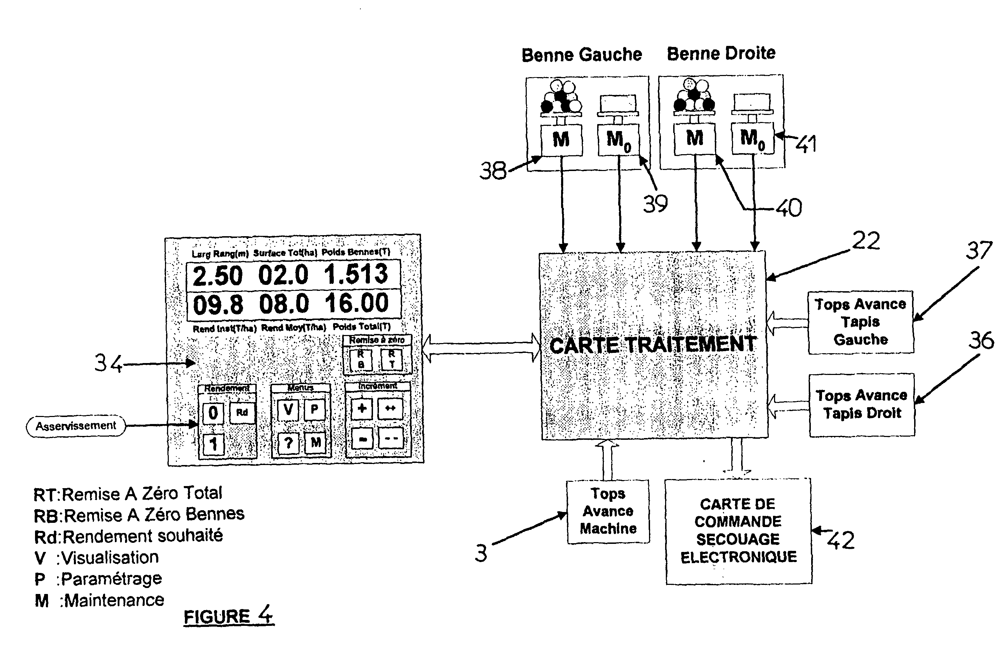

La figure 4 est une vue synoptique du système de pesage en continu de récolte selon l'invention.

La figure 5 est une représentation de l'algorithme permettant d'éliminer en permanence les causes de perturbation des mesures constituées par les bruits et les inclinaisons de la machine de récolte.

On se reporte auxdits dessins pour décrire un exemple intéressant, bien que nullement limitatif, de réalisation du dispositif et de mise en oeuvre du procédé de récolte sélective de baies selon l'invention, applicables à une machine à vendanger.

On souligne toutefois encore que le procédé et le dispositif de pesage selon l'invention s'appliquent au pesage, en continu, et/ou par lots successifs, de récoltes de produits agricoles variés et aux machines adaptées à la récolte de ces produits faisant application de ce procédé et de ce dispositif.

En considérant que les machines à vendanger comportent le plus souvent deux convoyeurs de réception des baies disposés de part et d'autre de leur plan vertical médian (c'est-à-dire à droite et à gauche dudit plan en considérant le sens d'avancement de ces machines) et acheminant lesdites baies jusqu'à une ou deux bennes disposées à la partie supérieure de la machine, les machines comportant application de l'invention seront équipées de deux dispositifs de pesage identiques installés sur la trajectoire de la récolte. De manière préférée, ces dispositifs sont placés au-dessous des ouvertures de déchargement des élévateurs débouchant dans les bennes. Ils sont par exemple fixés, au moyen de liaisons élastiques, sur les carters desdits élévateurs.

Chaque dispositif de pesage comprend deux balances électroniques, de préférence identiques 20 et 21, par exemple à jauge de contrainte ou à système capacitif reliées à un ensemble calculateur électronique 22, ces deux balances étant placées fixement sur un même support 43.

L'une de ces balances (balance 20) supporte un plateau de pesée 23 placé sur la trajectoire de la récolte R, ce plateau de pesée restant immobile à son emplacement de montage. La seconde balance (balance 21) est une balance témoin. Elle supporte une masse de référence fixe connue ($M_o$) 24. Cette masse correspond au poids du plateau 23 plus une masse correspondant à la masse moyenne que peut récolter le système. Par exemple, le poids de l'ensemble de la masse de référence peut être de 400 g (poids du plateau 23) + 250 g de masse représentant la moitié de la capacité maximum du système de pesage.

Un système d'entraînement de la récolte indépendant du plateau de pesée 23 de la balance de pesage 20, permet de faire passer, la vendange, en continu et/ou par lots successifs, sur ledit plateau de pesée. Ce système comprend une bande transporteuse sans fin 25 s'enroulant sur deux tambours 26 et 27. Des moyens de mesure reliés au calculateur électronique 22 permettent de mesurer la vitesse de déplacement de cette bande transporteuse.

7      EP 0 937 233 B1      8

Par exemple, selon le mode d'exécution illustré, le tambour 26 moteur est entrainé par un moteur hydraulique ou autre. La vitesse de rotation de ce tambour moteur est mesurée par un capteur 28, par exemple par un capteur à effet Hall, qui détecte le passage d'aimants permanents 29 montés sur ledit tambour, ce capteur étant relié à l'ensemble calculateur électronique 22. Les aimants 29 sont régulièrement espacés autour du tambour.

La bande transporteuse 25 est munie, sur sa face externe, de tasseaux 30 orientés transversalement. Ces tasseaux permettent :

- l'entraînement de la récolte déversée sur le brin supérieur de ladite bande transporteuse ;

- le fractionnement de la récolte en "doses" qui se trouvent maintenues entre lesdits tasseaux, quelle que soit l'inclinaison de la machine de récolte.

- l'acheminement de la récolte jusqu'au plateau de pesée 23 de la balance de pesage 20 et son passage, en continu et/ou par lots successifs, sur ledit plateau de pesée.

on souligne le fait que le système d'entraînement de la récolte est indépendant du plateau de pesée 23, c'est à dire ne touche pas ce dernier, de sorte que la tare fixe se limite au seul plateau de pesée.

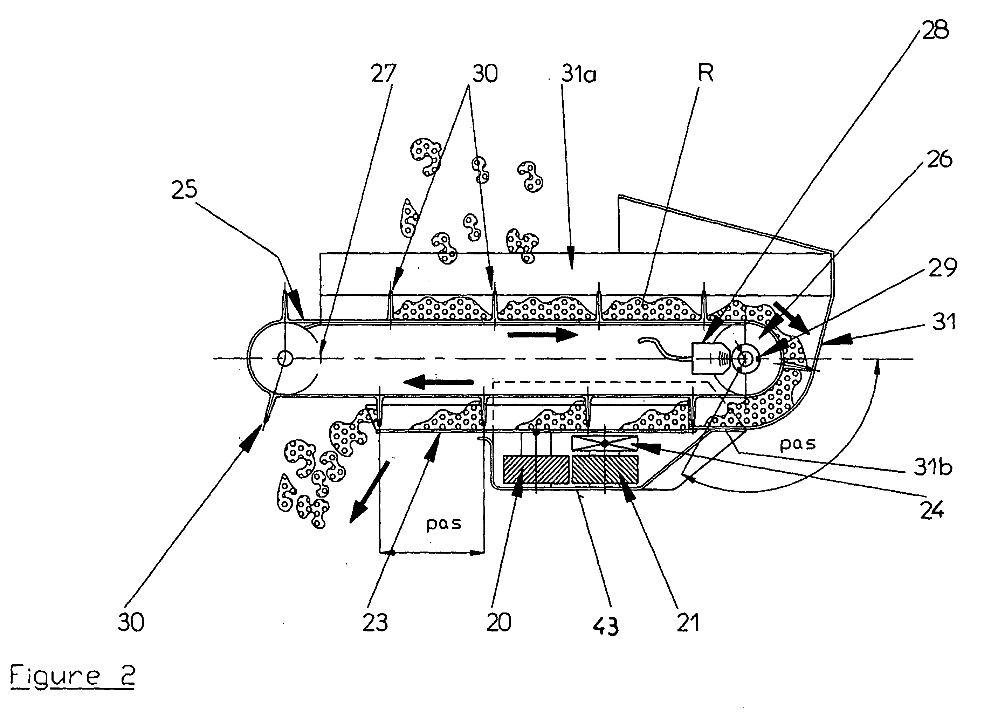

D'autre part, le dispositif et le procédé de l'invention permettent des pesées de petits lots indépendants entre eux, de sorte que le plateau de pesée 23 ne supporte, à chacune instant, qu'un petit nombre de lots, par exemple trois lots comme le montre notamment la figure 2.

L'espacement angulaire entre deux aimants 29 est fonction de l'espacement ménagé entre deux tasseaux 30 consécutifs, de sorte que le déplacement angulaire entre deux aimants correspond exactement au déplacement de deux tasseaux consécutifs de la bande transporteuse.

La bande transporteuse 25 est logée dans un carter 31 dont les parois latérales 31 a permettent de contenir la vendange sur les côtés de ladite bande transporteuse. Celle-ci peut être pourvue latéralement de nervures latérales 25a permettant de retenir le jus sur son brin supérieur.

Le fond 31 b de ce carter comporte une ouverture dans laquelle se trouve disposé le plateau peseur 23 de la balance peseuse 20. Le bord de cette ouverture. par exemple constitué par une portion plane du fond 31 b, et le plateau peseur 23, sont disposés dans le même plan, de façon que la vendange puisse passer, sans secousses, du fond du carter audit plateau peseur.

Des rails 44 solidaires des parois latérales 31 a du carter 31 et disposés de part et d'autre du brin inférieur de la bande transporteuse, permettent de guider ledit brin inférieur, de sorte que les tasseaux 30 de ladite bande transporteuse ne puissent, en aucun cas, toucher le plateau peseur 23.

Comme indiqué précédemment, les deux ensembles peseurs comportant les dispositions caractéristiques ci-dessus peuvent être fixés, au moyen de liaisons élastiques, sur les convoyeurs élévateurs 32 des machines à vendanger, au-dessous de l'ouverture de déchargement 32a de ces derniers et au-dessus des bennes collectrices 33.

L'ensemble calculateur électronique 22 peut être avantageusement constitué par une carte électronique à microprocesseur. Dans ce cas, cette carte comporte des entrées et sorties numériques et analogiques, à savoir :

- Entrées numériques : clavier de commande 34, capteur de vitesse d'avancement de la machine 35, tops d'avance tapis droit 36, tops d'avance tapis gauche 37 ;

- Entrées analogiques : clavier de commande 34, signal balance plateau gauche 38, signal masse de référence plateau gauche 39, signal balance plateau droit 40, signal masse de référence plateau droit 41 ;

- Sorties analogiques : clavier de commande 34, carte de commande de secouage électronique 42.

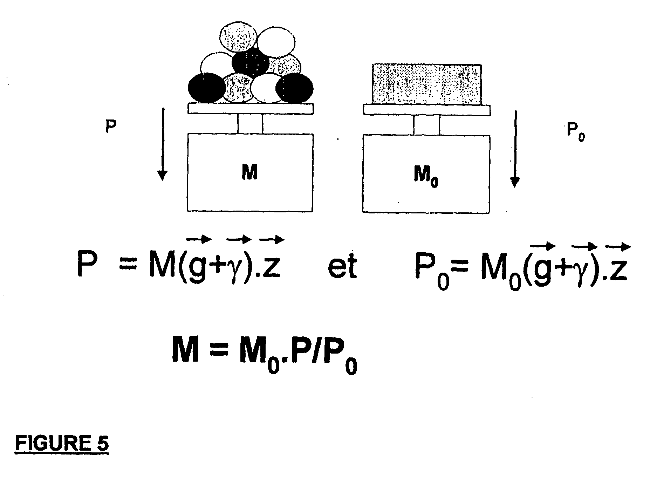

Selon le procédé de l'invention, la balance témoin à masse de référence connue $M_o$ 24 permet, par application de l'algorithme selon la figure 5, d'ajuster en permanence les mesures transmises par les balances peseuses, en éliminant, en permanence, les causes de perturbation de ces mesures constituées par les secousses plus ou moins violentes auxquelles est soumise la machine et les inclinaisons de ladite machine, lorsque cette dernière travaille (il faut en effet se rappeler que les terrains plantés sont plus ou moins accidentés, plus ou moins défoncés et plus ou moins détrempés).

Selon une autre disposition caractéristique du procédé de l'invention, on effectue des pesées partiellement redondantes (c'est-à-dire une nouvelle pesée avant que la récolte déjà pesée ait complètement quitté le plateau), ces pesées redondantes permettant d'augmenter la précision de calcul du débit massique, que ce soit pour la valeur instantanée ou pour la valeur moyenne.

Par exemple, les "tops pesée" sont donnés par le capteur 28 du tambour moteur 26 et correspondent aux passages successifs de deux tasseaux 30. Pendant ce temps, des séquences successives de plusieurs pesées sont effectuées et le calculateur électronique 22 établit la moyenne de ces pesées pour chaque séquence. Par exemple, 3 pesées sont successivement réalisées : par exemple 1 toutes les 50 millisecondes. La moyenne de 3 pesées permet d'obtenir une précision de l'ordre de 3%.

5

Les essais ont démontré que la capacité hectare du dispositif de pesage peut être de l'ordre de 30 tonnes/ha, avec la précision susmentionnée.

On observe que pour la seule application de pesage en continu, le clavier de commande 34 permet de rentrer la largeur des plantations. Il permet également la remise à zéro :

- du pesage en début de parcelle ;

- du pesage des bennes à chaque vidage.

Les résultats affichés sur l'afficheur du clavier de commande 34 sont :

- la surface totale parcourue par la machine depuis la mise à zéro totale : il s'agit de la distance effectuée par la machine (secouage en marche) multipliée par la largeur des plantations.

- le poids total des deux bennes depuis le dernier vidage: cette indication permet au conducteur d'apprécier le moment du vidage des bennes.

- le poids total des vendanges récoltées depuis le début de la parcelle.

- le rendement moyen total : il s'agit du poids total divisé par la surface récoltée.

- le rendement instantané réalisé sur une distance d'un mètre, ceci avec un décalage de 2 secondes.

L'invention concerne également les machines de récolte de produits agricoles variés, par exemple se présentant sous forme de grains, graines, drupes, baies ou autres, comportant application des dispositions caractéristiques du dispositif et du procédé ci-dessus.

**Revendications**

1. Procédé de pesage embarqué sur machine de récolte, suivant lequel :

   - on dispose deux balances électroniques (20, 21), de préférence identiques, sur un même support (43) et le plus près possible l'une de l'autre, ces balances étant par exemple à jauge de contrainte ou à système capacitif ; - on relie les deux balances à un calculateur électronique (22) capable d'effectuer un traitement algorithmique des signaux provenant des deux balances pour éliminer l'effet des perturbations dynamiques résultant des pentes, inclinaisons et vibrations auxquelles elles sont soumises lorsque ladite machine de récolte est en action, l'une des balances (21) supporte une masse fixe connue (24) et opère des pesées successives de cette masse ;

   - l'autre balance (20) est munie d'un plateau de pesée (23) placé sur le trajet de la récolte (R) et opère en même temps des pesées de cette récolte ; **caractérisé en ce que** la récolte (R) est acheminée automatiquement, en continu et/ou par lots successifs, sur le plateau de pesée (23) de la seconde balance (20), au moyen d'un système d'entraînement (25-30) indépendant dudit plateau de pesée (23), c'est-à-dire ne touchant pas ce dernier.

2. Dispositif de pesage embarqué sur machine de récolte, comprenant deux balances électroniques (20, 21), de préférence identiques, par exemple à jauge de contrainte ou à système capacitif, placées sur un même support (43) et reliées à un calculateur électronique (22) capable d'effectuer un traitement algorithmique des signaux provenant des deux balances, pour éliminer l'effet des perturbations dynamiques résultant des pentes, inclinaisons et vibrations auxquelles elles sont soumises lorsque ladite machine de récolte est en action, l'une de ces balances étant une balance témoin (21) supportant une masse de référence fixe connue $M_o$ (24), tandis que la seconde balance (20) supporte un plateau de pesée (23) placé sur le trajet de la récolte (R), **caractérisé en ce qu'**il comprend un système (25-30) d'entraînement automatique de la récolte, indépendant du plateau de pesée (23), c'est-à-dire ne touchant pas ce dernier et se déplaçant au-dessus dudit plateau de pesée, ce système d'entraînement assurant le passage, en continu et/ou par lots successifs, de la récolte (R) sur ledit plateau de pesée (23).

3. Procédé selon la revendication 1, **caractérisé en ce que** l'algorithme de traitement des signaux P et $P_o$ provenant des deux balances est le suivant :

$$(1) \qquad P = M. [(\vec{g} + \vec{\gamma}). \vec{Z}]$$

$$(2) \qquad P_o = M_o. [(\vec{g} + \vec{\gamma}). \vec{Z}]$$

d'où on déduit:

$$(3) \qquad M = M_o. P/P_o$$

algorithme dans lequel :

P est la force mesurée,
M est la masse à mesurer,
$\vec{g}$ est l'accélération de la pesanteur, dirigée vers le bas,

$\dot{\vec{\gamma}}$ est l'accélération représentant les perturbations dynamiques, dirigée aléatoirement.

$\vec{Z}$ est le vecteur unitaire perpendiculaire aux plateaux de pesée, et est orienté suivant l'inclinaison de la machine

$P_o$ est la force mesurée par la balance témoin supportant la masse fixe ;

$M_o$ est la valeur de la masse fixe.

**4.** Procédé selon l'une des revendications 1 ou 3, suivant lequel le passage de la récolte sur le plateau de pesage (23) de la balance peseuse (20) est assuré par une bande transporteuse (25), **caractérisé en ce que** l'on prend en compte la vitesse de déplacement de cette bande transporteuse pour calculer, au moyen du calculateur électronique (22) le débit massique récolté.

**5.** Procédé selon l'une quelconque des revendications 1, 3 ou 4, **caractérisé en ce que** le calculateur électronique (22) du système de pesage est accouplé aux capteurs de roues ou autres dispositifs de mesure de vitesse d'avancement équipant la machine de récolte, et prend en compte ces informations pour calculer le rendement à l'hectare.

**6.** Procédé selon l'une quelconque des revendications 1, 3, 4 ou 5, **caractérisé en ce que** l'on effectue des pesées partiellement redondantes, c'est-à-dire une nouvelle pesée avant que la récolte déjà pesée ait complètement quitté le plateau, ces pesées redondantes permettant d'augmenter la précision de calcul du débit massique, que ce soit pour la valeur instantanée ou pour la valeur moyenne.

**7.** Dispositif selon la revendication 2, **caractérisé en ce que** le poids de la masse de référence fixe $M_o$ (24) équipant la balance témoin (21) correspond au poids du plateau (23) de la balance peseuse (20), plus une masse correspondant à la masse moyenne que peut récolter le système.

**8.** Dispositif suivant la revendication 2, **caractérisé en ce que** le système d'entraînement de la récolte assurant le passage, en continu, de celle-ci sur le plateau (23) de la balance peseuse (20), comprend une bande transporteuse sans fin (25) s'enroulant sur deux tambours (26, 27), cette bande transporteuse qui comporte des tasseaux transversaux espacés (30) sur sa face externe est logée dans un carter (31) dont le fond (31 a) comporte une ouverture dans laquelle se trouve disposé le plateau de pesage (23) de la balance peseuse (20).

**9.** Dispositif selon la revendication 8, **caractérisé en ce que** le bord de ladite ouverture, par exemple constitué par une portion plane du fond (31 b) du carter (31) et le plateau de pesage (23) de la balance peseuse (20) sont disposés dans le même plan.

**10.** Dispositif selon l'une des revendications 8 ou 9, **caractérisé en ce qu'**il comporte des moyens de mesures (28, 29) reliés au calculateur électronique (22) et permettant de mesurer la vitesse de déplacement de la bande transporteuse (25).

**11.** Dispositif suivant la revendication 10, **caractérisé en ce que** le tambour moteur (26) de la bande transporteuse (25) est muni d'aimants permanents (29) régulièrement espacés autour du tambour, un capteur (28), relié à l'ensemble calculateur électronique (22) étant monté à proximité dudit tambour pour détecter le passage desdits aimants, lors de l'entraînement en rotation de ce dernier.

**12.** Dispositif selon la revendication 11, **caractérisé en ce que** l'espacement angulaire entre deux aimants (29) est fonction de l'espacement ménagé entre deux tasseaux consécutifs (30) de la bande transporteuse (25), l'espacement est tel qu'on mesure exactement un passage de tasseaux entre deux détections consécutives d'aimants.

**13.** Dispositif suivant la revendication 8, **caractérisé en ce que** les parois latérales (31 a) du carter (31) sont équipées de rails pour le guidage du brin inférieur de la bande transporteuse (25).

**14.** Machine de récolte de produits agricoles sous forme de grains, graines, drupes ou baies, par exemple machine à vendanger, **caractérisée en ce qu'**elle est équipée d'un dispositif de pesage en continu et/ou par lots successifs, selon l'une quelconque des revendications 2 et 7 à 13 ou agencée pour permettre la mise en oeuvre du procédé selon l'une quelconque des revendications 1, 3, 4, 5 ou 6.

**15.** Machine de récolte de baies selon la revendication 14, **caractérisée en ce qu'**un dispositif de pesage en continu et/ou par lots successifs, est monté, au moyen de liaisons élastiques, sur chaque convoyeur élévateur de ladite machine, au-dessous des ouvertures de déchargement de ces derniers.

**Patentansprüche**

**1.** In eine Erntemaschine integriertes Wiegeverfahren, gemäß dem:

- zwei elektronische Waagen (20, 21), die vorzugsweise identisch sind, auf einer gleichen Halterung (43) und so nahe wie möglich beieinander angeordnet werden, wobei diese Waagen beispielsweise ein Dehnungsmessgerät oder ein kapazitives System aufweisen;

- die beiden Waagen mit einem elektronischen Rechner (22) verbunden werden, der eine algorithmische Verarbeitung der Signale ausführen kann, die von den zwei Waagen kommen, um den Effekt der dynamischen Störungen zu eliminieren, die von den Steigungen, Neigungen und Vibrationen stammen, denen sie unterworfen sind, wenn sich die Erntemaschine in Aktion befindet, wobei eine der Waagen (21) eine feste bekannte Masse (24) trägt und aufeinander folgende Wiegevorgänge dieser Masse vornimmt;

- die andere Waage (20) mit einer Waagschale (23) ausgestattet ist, die auf dem Pfad der Ernte (R) positioniert ist und gleichzeitig Wiegevorgänge dieser Ernte vornimmt;

**dadurch gekennzeichnet, dass** die Ernte (R) automatisch kontinuierlich und/oder in aufeinander folgenden Chargen mittels eines von der Waagschale (23) unabhängigen, das heißt, diese nicht berührenden Antriebssystems (25 - 30) auf die Waagschale (23) der zweiten Waage (20) geführt wird.

2. In eine Emtemaschine integrierte Wiegevorrichtung, die zwei elektronische Waagen (20, 21) umfasst, die vorzugsweise identisch sind, beispielsweise mit einem Dehnungsmessgerät oder einem kapazitiven System, die auf einer gleichen Halterung (43) angeordnet und mit einem elektronischen Rechner (22) verbunden sind, der eine algorithmische Verarbeitung der Signale ausführen kann, die von den zwei Waagen kommen, um den Effekt der dynamischen Störungen zu eliminieren, die von den Steigungen, Neigungen und Vibrationen stammen, denen sie unterworfen sind, wenn sich die Erntemaschine in Aktion befindet, wobei eine der Waagen eine Vergleichswaage (21) ist, die eine feste bekannte Referenzmasse $M_0$ (24) trägt, während die zweite Waage (20) eine Waagschale (23) trägt, die auf dem Pfad der Ernte (R) positioniert ist, **dadurch gekennzeichnet, dass** sie ein automatisches Antriebssystem (25 - 30) für die Ernte umfasst, das von der Waagschale (23) unabhängig ist, das heißt, diese Letztere nicht berührt, und sich über der Waagschale bewegt, wobei dieses Antriebssystem das kontinuierliche und/oder in Chargen erfolgende Durchlaufen der Ernte (R) auf die Waagschale (23) sicherstellt.

3. Verfahren nach Anspruch 1, **dadurch gekennzeichnet, dass** der Verarbeitungs-Algorithmus für die Signale P und $P_0$, die von den zwei Waagen kommen, wie folgt ist:

$$(1) \qquad P = M.[(\vec{g}+\vec{\gamma}).\vec{Z}]$$

$$(2) \qquad P_0 = M_0.[(\vec{g}+\vec{\gamma}).\vec{Z}]$$

woraus folgt:

$$(3) \qquad M = M_0.P/P_0$$

ein Algorithmus, in dem:

P die gemessene Kraft ist,
M die zu messende Masse ist,
$\vec{g}$ die Beschleunigung der nach unten gerichteten Schwerkraft ist,
$\vec{\gamma}$ die in zufällige Richtungen gerichtete Beschleunigung ist, welche dynamische Störungen darstellt,
$\vec{Z}$ der einheitliche, zu den Waagschalen senkrechte Vektor ist, und gemäß der Neigung der Maschine ausgerichtet ist,
$P_0$ die von der Vergleichswaage gemessene Kraft ist, welche die feste Masse trägt,
$M_0$ der Wert der festen Masse ist.

4. Verfahren nach einem der Ansprüche 1 oder 3, gemäß dem der Durchlauf der Ernte auf der Waagschale (23) der wiegenden Waage (20) durch ein Förderband (25) sichergestellt wird, **dadurch gekennzeichnet, dass** die Bewegungsgeschwindigkeit dieses Förderbands berücksichtigt wird, um mittels des elektronischen Rechners (22) den spezifischen Emteausstoß zu berechnen.

5. Verfahren nach einem der Ansprüche 1, 3 oder 4, **dadurch gekennzeichnet, dass** der elektronische Rechner (22) des Wiegesystems mit den Rad-Messfühlem oder anderen Vorrichtungen zum Messen der Vorschubgeschwindigkeit gekoppelt ist, mit denen die Erntemaschine ausgestattet ist, und diese Informationen zum Berechnen der Ertrags pro Hektar berücksichtigt.

6. Verfahren nach einem der Ansprüche 1, 3, 4 oder 5, **dadurch gekennzeichnet, dass** Wiegevorgänge teilweise redundant ausgeführt werden, das heißt, ein neuer Wiegevorgang, bevor die bereits gewogene Ernte die Schale vollständig verlassen hat, wobei diese redundanten Wiegevorgänge es ermöglichen, die Berechnungsgenauigkeit des spezifischen Ausstoßes zu erhöhen, sei es hinsichtlich des augenblicklichen Werts oder hinsichtlich des Durchschnittswerts.

7. Vorrichtung nach Anspruch 2, **dadurch gekennzeichnet, dass** das Gewicht der festen Referenz-

masse $M_0$ (24), mit dem die Vergleichswaage (21) ausgestattet ist, dem Gewicht der Schale (23) der wiegenden Waage (20) zusätzlich einer Masse entspricht, die der durchschnittlichen Masse entspricht, die das System emten kann.

8.  Vorrichtung nach Anspruch 2, **dadurch gekennzeichnet, dass** das Antriebssystem für die Ernte, das deren kontinuierlichen Durchlauf auf der Schale (23) der wiegenden Waage (20) sicherstellt, ein Endlosförderband (25) umfasst, das um zwei Trommeln (26, 27) umläuft, wobei dieses Förderband, das quer beabstandete Tragstücke (30) auf seinen äußeren Seite umfasst, sich in einem Gehäuse (31) befindet, dessen Boden (31a) eine Öffnung umfasst, in der die Waagschale (23) der wiegenden Waage (20) angeordnet ist.

9.  Vorrichtung nach Anspruch 8, **dadurch gekennzeichnet, dass** der Rand der Öffnung, der beispielsweise aus einem ebenen Teil des Bodens (31b) des Gehäuses (31) gebildet wird, und die Waagschale (23) der wiegenden Waage auf der gleichen Ebene angeordnet sind.

10. Vorrichtung nach einem der Ansprüche 8 oder 9, **dadurch gekennzeichnet, dass** sie Mittel zum Messen (28, 29) umfasst, die mit dem elektronischen Rechner (22) verbunden sind und es gestatten, die Bewegungsgeschwindigkeit des Förderbands (25) zu messen.

11. Vorrichtung nach Anspruch 10, **dadurch gekennzeichnet, dass** die Motortrommel (26) des Förderbands (25) mit regelmäßig um die Trommel beabstandeten Dauermagneten (29) ausgestattet ist, wobei ein Messfühler (28), der mit der elektronischen Rechnereinheit (22) verbunden ist, in der Nähe der Trommel befestigt ist, um den Durchlauf der Magneten während des Drehantriebs der Letzteren zu erfassen.

12. Vorrichtung nach Anspruch 11, **dadurch gekennzeichnet, dass** die winklige Beabstandung zwischen zwei Magneten (29) eine Funktion der Beabstandung ist, die zwischen zwei aufeinander folgenden Tragstücken (30) des Förderbands (25) ausgespart ist, wobei die Beabstandung solcher Art ist, dass genau ein Durchlauf von Tragstücken zwischen zwei aufeinander folgenden Erfassungen von Magneten gemessen wird.

13. Vorrichtung nach Anspruch 8, **dadurch gekennzeichnet, dass** die Seitenwände (31a) des Gehäuses (31) mit Schienen zum Führen des unteren Trums des Förderbands (25) ausgestattet sind.

14. Erntemaschine für Agrarprodukte in Form von Kömern, Kemen, Steinfrüchten oder Beeren, beispielsweise eine Weinlesemaschine, **dadurch gekennzeichnet, dass** sie mit einer Vorrichtung zum kontinuierlichen Wiegen und/oder Wiegen von aufeinander folgenden Chargen nach einem der Ansprüche 2 und 7 bis 13 ausgestattet ist, oder so ausgelegt ist, dass sie die Umsetzung des Verfahrens nach einem der Ansprüche 1, 3, 4, 5 oder 6 gestattet.

15. Erntemaschine nach Anspruch 14, **dadurch gekennzeichnet, dass** eine Vorrichtung zum kontinuierlichen Wiegen und/oder Wiegen von aufeinander folgenden Chargen mittels elastischer Verbindungen auf jedem Hubförderer der Maschine unter den Entladeöffnungen dieser Letzteren befestigt ist.

## Claims

1.  A method of on-board weighing on a harvesting machine wherein

    - two preferably identical electronic weighing devices (20, 21) are disposed on a common support (43) and as close to each other as possible, said weighing devices being for example of strain gauge or capacitive system type;

      the two weighing devices are connected to an electronic computer (22) capable of executing algorithmic processing of the signals from the two weighing devices to eliminate the effect of the dynamic disturbances resulting from the slopes, inclinations and vibration to which they are subjected when the harvesting machine is in action, one of the weighing devices (21) supports a known fixed mass (24) and effects successive weighing operations of said mass;

    - the other weighing device (20) is provided with a weighing platform (23) which is disposed on the path of movement of the crop material (R) and at the same time effects weighing operations in respect of that crop material; **characterised in that** the crop material (R) is routed automatically continuously and/or in successive batches on to the weighing platform (23) of the second weighing device (20) by means of an entrainment system (25-30) which is independent of said weighing platform (23), that is to say not touching the latter.

2.  An on-board weighing device on a harvesting machine comprising two preferably identical electronic weighing devices (20, 21), for example of strain gauge or capacitive system type, which are disposed on a common support (23) and connected to an electronic computer (22) capable of executing algorithmic processing of the signals from the two weighing devices to eliminate the effect of the dynamic disturbances resulting from the slopes, inclination and vibration to which they are subjected when the harvesting machine is in action, one of said weighing devices being a reference weighing device (21) supporting a known fixed reference mass $M_o$ (24) while the second weighing device (20) supports a weighing platform (23) disposed on the path of movement of the crop material (R), **characterised in that** it comprises a system (25-30) for automatic entrainment of the crop material, which is independent of the weighing platform (23), that is to say not touching the latter and being displaced above said weighing platform, said entrainment system providing for the movement continuously and/or in successive batches of the crop material (R) on to said weighing platform (23).

3. A method according to claim 1 **characterised in that** the algorithm for processing of the signals P and $P_o$ from the two weighing devices is as follows:

$$(1) \qquad P = M. [(\vec{g} + \vec{\gamma}).\vec{Z}]$$

$$(2) \qquad P_o = M_o [(\vec{g} + \vec{\gamma}).\vec{Z}]$$

from which the following is deduced:

$$(3) \qquad M = M_o. P/P_o$$

in which algorithm:

P is the measured force,
M is the mass to be measured,
$\vec{g}$ is the acceleration due to gravity which is directed downwardly,
$\vec{\gamma}$ is the acceleration representing the dynamic disturbances, which is randomly directed,
$\vec{Z}$ is the unit vector which is perpendicular to the weighing platforms and is oriented according to the inclination of the machine,
$P_o$ is the force measured by the reference weighing device supporting the fixed mass; and
$M_o$ is the value of the fixed mass.

4. A method according to one of claims 1 and 3 wherein the movement of the crop material on to the weighing platform (23) of the weighing device (20) is effected by a conveyor belt (25) **characterised in that** the speed of displacement of the conveyor belt is taken into consideration to calculate the harvested flow rate by mass by means of the electronic computer (22).

5. A method according to any one of claims 1, 3 and 4 **characterised in that** the electronic computer (22) of the weighing system is coupled to the wheel sensors or other devices for measuring the speed of forward movement on the harvesting machine and takes account of those items of information to calculate the yield per hectare.

6. A method according to any one of claims 1, 3, 4 and 5 **characterised in that** partially redundant weighing operations are effected, that is to say a new weighing operation is effected before the crop material which has already been weighed has completely left the platform, said redundant weighing operations making it possible to increase the precision with which the flow rate by mass is calculated, either for the instantaneous value or for the mean value.

7. A device according to claim 2 **characterised in that** the weight of the fixed reference mass $M_o$ (24) equipping the reference weighing device (21) corresponds to the weight of the platform (23) of the weighing device (20) plus a mass corresponding to the mean mass that the system can harvest.

8. A device according to claim 2 **characterised in that** the crop material entrainment system providing for the continuous movement thereof on to the platform (23) of the weighing device (20) comprises an endless conveyor belt (25) passing around two drums (26, 27), the conveyor belt which comprises spaced transverse cleats (30) on its external face is accommodated in a casing (31), the bottom (31a) of which comprises an opening in which is disposed the weighing platform (23) of the weighing device (20).

9. A device according to claim 8 **characterised in that** the edge of said opening, which edge is for example formed by a flat portion of the bottom (31b) of the casing (31), and the weighing platform (23) of the weighing device (20), are disposed in the same plane.

10. A device according to one of claims 8 and 9 **characterised in that** it comprises measuring means (28, 29) connected to the electronic computer (22) and making it possible to measure the speed of displacement of the conveyor belt (25).

11. A device according to claim 10 **characterised in that** the drive drum (26) of the conveyor belt (25) is provided with permanent magnets (29) regularly spaced around the drum, a sensor (28) which is connected to the electronic computer assembly (22) being mounted in the proximity of said drum to detect the passage of said magnets when it is driven in rotation.

**12.** A device according to claim 11 **characterised in that** the angular spacing between two magnets (29) is a function of the spacing provided between two consecutive cleats (30) of the conveyor belt (25), and the spacing is such that a movement of cleats is measured precisely between two consecutive detections of magnets.

**13.** A device according to claim 8 **characterised in that** the side walls (31a) of the casing (31) are equipped with rails for guiding the lower run of the conveyor belt (25).

**14.** A harvesting machine for agricultural products in the form of grains, seeds, drupes or berries, for example a grape harvesting machine, **characterised in that** it is provided with a device for weighing continuously and/or in successive batches, according to any one of claims 2 and 7 to 13 or arranged to permit the method according to any one of claims 1, 3, 4, 5 and 6 to be carried out.

**15.** A berry harvesting machine according to claim 14 **characterised in that** a device for weighing continuously and/or in successive batches is mounted by means of elastic connections on each elevator conveyor of said machine below the discharge openings of said elevator conveyors.

Figure 1

Figure 2

Figure 3



**Benne Gauche**  **Benne Droite**

M   M₀   M   M₀  — 41

38   39   40

22   37   36

EP 0 937 233 B1

Larg Rang(m)  Surface Tot(ha)  Poids Bennes(T)

**2.50  02.0  1.513**
**09.8  08.0  16.00**

Rend Inst(T/ha)  Rend Moy(T/ha)  Poids Total(T)

Remise à zéro
RB  RT

34

Asservissement

Rendement  Menus  Increment
0  Rd   V  P   +  ↔
1       ?  M   -  --

**CARTE TRAITEMENT**

Tops Avance Tapis Gauche

Tops Avance Tapis Droit

Tops Avance Machine

3

CARTE DE COMMANDE SECOUAGE ELECTRONIQUE  — 42

RT: Remise A Zéro Total
RB: Remise A Zéro Bennes
Rd: Rendement souhaité
V : Visualisation
P : Paramétrage
M : Maintenance

FIGURE 4

$$P = M(\vec{g}+\vec{\gamma}).\vec{z} \quad \text{et} \quad P_0 = M_0(\vec{g}+\vec{\gamma}).\vec{z}$$

$$M = M_0 . P/P_0$$

**FIGURE 5**

EP 0 937 233 B1